# EUROPEAN PATENT APPLICATION

(11) **EP 1 020 865 A1**
(43) Date of publication of application: **19.07.2000**
(21) Application number: 00300123.7
(22) Date of filing: 10.01.2000
(51) Int. Cl.: G11C 7/16

(54) **Picture recording and/or reproducing apparatus and method**

(30) Priority: 14.01.1999 JP 714999
(71) Applicant: SONY CORPORATION, Tokyo (JP)
(72) Inventor: Nishimura, Hajime, Shinagawa-ku, Tokyo (JP); Fukushima, Seigo, Shinagawa-ku, Tokyo (JP)
(74) Representative: Harris, Ian Richard

(57) **Abstract**

In an image recording/reproducing device and an image reproducing method, when image data are input to an image data recording unit during an image data recording operation, image data management information generating means divides the image data to predetermined-size blocks, and generates image data management information for each block. Image data writing means records the image data thus divided at a predetermined place of a memory, and likewise records the image data management information. In an image data reproducing operation, in an image data reproducing unit, image data searching means reads out the image data management information recorded in the memory, and searches an image data file to be next displayed on the basis of the image data management information. The image data thus searched are read out from the memory, reproduced as image data and then transmitted to display means by the image data reproducing means.

## Description

### BACKGROUND OF THE INVENTION

### 1. Field of the Invention

The present invention relates to an image recording/reproducing device for recording/reproducing motional images, and particularly to an image recording/reproducing device having a randomly-accessible recording medium and an image reproducing method therefor.

### 2. Description of the Related Art

Various video devices such as 8-mm type and DV-type have generally propagated as image recording/reproducing devices for recording motional images (pictures). In such video devices, motional image data are sequentially recorded from its recording start position during an image recording operation. In addition, during a reproducing operation of motional pictures (video images), image data which are sequentially recorded are also sequentially reproduced. When the image data thus sequentially recorded are searched, the searching operation of the image data must be basically started from the head position of the image data.

In the related art image recording/reproducing device as described above, however, it is not easy to perform the search and edition of image data because the image data are sequentially recorded.

Particularly, it is expected that recording/reproduction of motional pictures in randomly-accessible recording media such as a hard disc and a solid-state memory will be the main current in the future. However, the related art image recording/reproducing device cannot effectively use the characteristics of these recording media because the image data are recorded/reproduced sequentially.

An aim of the invention is to provide an image recording/reproducing device which enables a random access to motional image data and thus facilitates the search and edition of the image data, and an image reproducing method therefor.

### SUMMARY OF THE INVENTION

Particular and preferred aspects of the invention are set out in the accompanying independent and dependent claims. Features of the dependent claims may be combined with those of the independent claims as appropriate and in combinations other than those explicitly set out in the claims.

An embodiment of the invention provides an image recording/reproducing device which has a randomly-accessible recording medium and serves to record/reproduce image data constituting motional image data of any time, characterized by comprising: an image data recording unit which includes image data management information generating means for generating image management information indicating the arrangement of the image data, and image data writing means for writing the image data management information and the image data into a recording medium; a recording medium in which the image data management information and the image data are recorded; and an image data reproducing unit which includes image data searching means for searching desired image data on the basis of the image data management information recorded in the recording medium, and image data reproducing means for reproducing image data selected by the image data searching means.

In the image recording/reproducing device thus constructed, when the image data are input to the image data recording unit, the image data management information generating means, for example, shares the image data to predetermined-size blocks (i.e., the image data are divided into plural blocks each having a predetermined size) and generates image data management information for each block. The image data writing means records the image data shared to the blocks at predetermined places, and records the image data management information thereof. Both the image data and the image data management information are recorded in the recording medium as described above. In the reproducing operation of the motional image data, the image data reproducing unit reads out the image data management information recorded in the recording medium by the image data searching means, and searches image data to be next displayed on the basis of the image data management information. The image data reproducing means reads out the image data thus searched to reproduces the desired image data.

There is provided an image recording device for recording image data constituting motional image data of any time into a randomly-accessible recording medium, characterized by comprising: image data management information generating means for sharing image data to predetermined-size block units and generating image data management information every block; and image data writing means for recording image data into a predetermined block area and writing the image data management information into the recording medium.

In the image recording device thus constructed, upon input of image data, the image data management information generating means shares (divides) the image data to predetermined-size blocks, and generates the image data management information indicating block numbers, etc. to be linked every block. The image data writing means records the image data shared to the blocks at predetermined places, and records the image data management information thereof.

There is provided an image reproducing device for reproducing image data constituting motional image data of any time which are recorded in a randomly-accessible recording medium, characterized by comprising: image data searching means for searching image data which are reproduced on the basis of image data management information on image data which are recorded in a recording medium and shared to predetermined block units; and image data reproducing means for reading out from the recording medium image data selected by the image data searching means and reproducing the image data.

In the image reproducing device thus constructed, the image data searching means searches image data to be next reproduced out of the block-based image data recorded in the recording medium. The image data thus searched are reproduced by the image data reproducing means.

There is provided an image reproducing method for reproducing image data constituting motional image data of any time which are recorded in a randomly-accessible recording medium, characterized by comprising: a step of searching image data management information on motional image data reproduced from a recording medium in which the image data are shared to predetermined-size blocks and recorded together with image data management information on the blocks; a step of reading out head block information indicating the number of the head block of the image data when the reproducing or reverse reproducing operation is carried out on the basis of the image data management information searched; a step for reading image data recorded in the block corresponding to the head block number thus obtained; a step of reading out link block information indicating block numbers which are to be linked in accordance with a reproduction order or reverse reproduction order contained in the image data management information; and a step of calculating a block number to be next reproduced from the link block information until the block number to be linked is identified as the last number, and repeating the reading operation of image data recorded in the block corresponding to the block number thus calculated.

In the image reproducing method described above, according to the link block information of the image data management information on the image data recorded in the recording medium, block numbers which are coincident with the reproduction order are selected, and the image data recorded on a block basis are successively read out and reproduced.

### BRIEF DESCRIPTION OF THE DRAWINGS

Exemplary embodiments of the invention are described hereinafter, by way of example only, with reference to the accompanying drawings, in which:
Fig. 1 is a diagram showing the construction of an image recording/reproducing device according to an embodiment of the present invention;
Fig. 2 shows the file structure of a memory of the image recording/reproducing device of the embodiment according to the present invention;
Fig. 3 shows the file structure of the memory in the reverse reproducing operation of the image recording/reproducing device of the embodiment of the present invention;
Fig. 4 is a flowchart showing he image reproducing method of the image recording/reproducing device according to an embodiment of the present invention; and
Fig. 5 shows the file structure of the memory of the image recording/reproducing device according to another embodiment of the present invention.

### DETAILED DESCRIPTION OF THE PREFERRED EMBODIMENTS

Preferred embodiments according to the present invention will be described with reference to the accompanying drawings.

In the following embodiment, the present invention is applied to a solid-state memory as a recording medium.

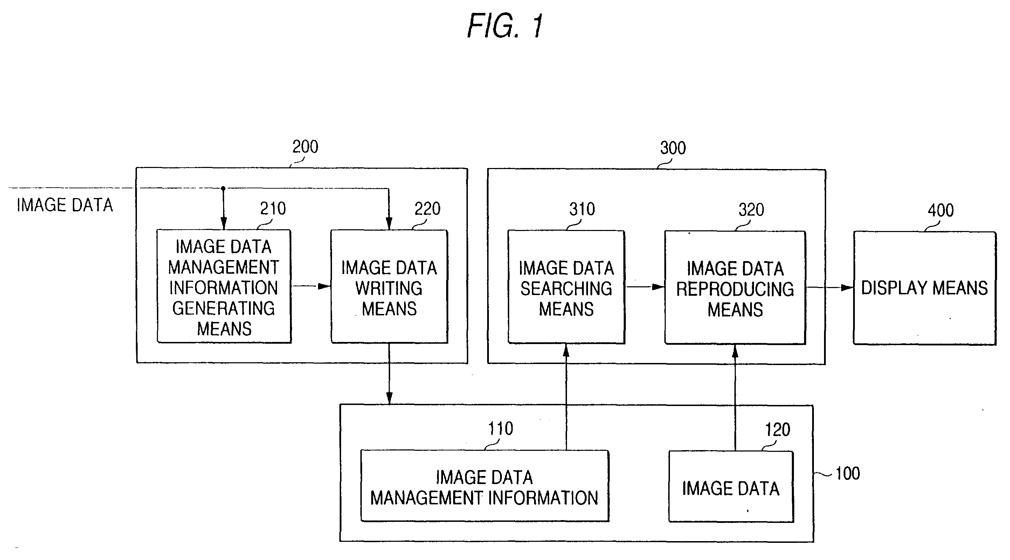

Fig. 1 is a diagram showing the construction of an image recording/reproducing device according to an embodiment of the invention.

The image recording/reproducing device according to the embodiment of the present invention comprises a memory 100 in which image data 120 and image data management information 110 indicating the arrangement of the image data 120 are recorded, an image data recording unit 200 for recording the image data and the management information therefor into the memory 100, an image data reproducing unit 300 for reproducing the image data on the basis of the image data management information recorded in the memory 100, and display means 400 for displaying the image data thus reproduced.

The image data recording unit 200 comprises image data management information generating means 210 for generating the image data management information of the image data input thereto and image data writing means 220 for writing the image data management information thus generated and the image data into the memory 100. The image data management information generating means 210 divides (shares) the image data thus input to blocks each having a predetermined size and generates management information (image data management information) indicating places at which the blocks are to be located in the memory 100 and also indicating sequential blocks (i.e., linkage of blocks). The image data writing means 220 stores the image data (blocked image data) at predetermined places of the memory 100, and records the image data management information into the memory 100.

The image data reproducing unit 300 comprises image data searching means 310 for searching image data to be reproduced, and image data reproducing means 320 for reproducing the image data thus searched. The image data searching means 310 reads out the image data management information recorded in the memory 100, and searches the image data to be next reproduced on the basis of the image data management information. The image data reproducing means 320 reads out from the memory 100 the image data searched by the image data searching means 310, reproduces the image data and outputs the image data to the display means 400.

The operation of the image recording/reproducing device thus constructed will be described.

As described above, upon input off the image data from image pickup means or the like into the image data recording unit 200, the image data management information generating means 210 divides the image data into predetermined-size blocks, and generates image data management information for each block. The image data writing means 220 records the image data thus divided at predetermined places of the memory 100, and likewise records the image data management information at a predetermined place of the memory 100. As described above, the image data management information 110 and the image data 120 are recorded at the predetermined places of the memory 100. During the image data reproducing operation, in the image data reproducing unit 300, the image data searching means 310 reads out the image data management information 110 recorded in the memory 100, and searches an image data file (image data) to be next displayed on the basis of the image data management information. The image data thus searched are read out from the memory 100 and reproduced by the image data reproducing means 320, and then transmitted to the display means 400.

Next, the image data 120 and the image data management information 110 which are generated by the image data management information generating means 210 and recorded in the memory 100 will be described.

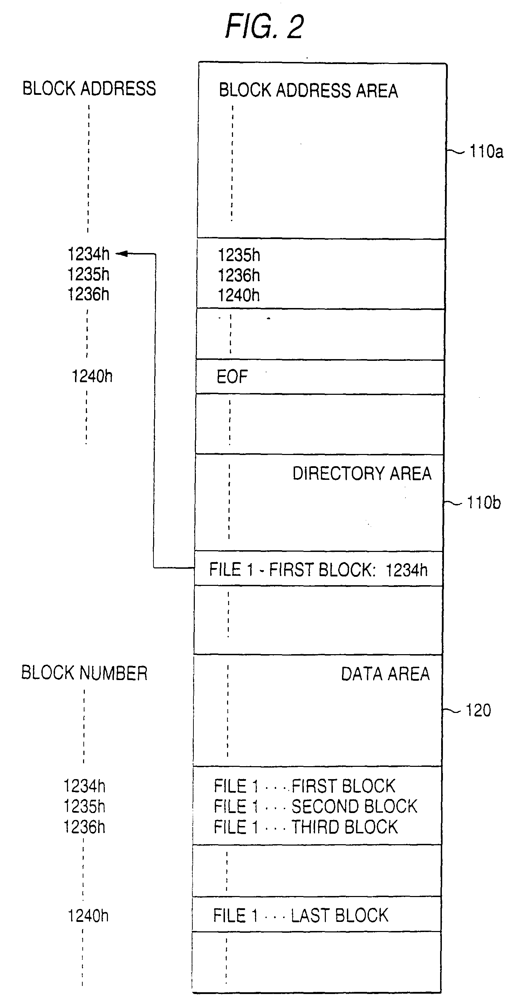

Fig. 2 shows the file structure of the memory of the image recording/reproducing device according to the embodiment of the present invention. A memory area in which the image data management information and the image data are recorded comprises a block address area 110a and a directory area 110b for recording the image data management information, and a data area 120 for recording the image data.

In the image recording/reproducing device according to the present invention, an image data file comprising motional image data of any time is divided to predetermined-size block units, and the image data are managed on a block basis.

In the block address area 110a is recorded block address information indicating blocks which are linked to reproduce desired motional images. For example, in the block address area corresponding to "1234h" is recorded "1235h" as a block address to be next linked. Further, a block address "1236h" is recorded in the block address area corresponding to "1235h", and a block address "1240h" is recorded in the block address area corresponding to "1236h". Likewise, block addresses to be sequentially linked are recorded as described above. EOF (End of File) is recorded in the last block.

In the directory area 110b is recorded head block information indicating the head block of the file. For example, "1234h" is recorded as the head block for a file 1.

In the data area 120, the corresponding image data are stored in a block indicated. For example, the first block of the file 1 is disposed at the block number "1234h".

Motional images of any time can be fabricated as a file by recording the image data of the motional images together with the image data management information as described above. In addition, the image file can be more easily searched and reproduced. For example, when the file 1 is reproduced, the first block address "1234h" of the file 1 is searched from the directory area 110b. By referring to "1234h" of the block address area 110a, it is found that "1235h" is located there and thus the image data corresponding to "1234h" and "1235h" are sequential to each other. Likewise, EOF is detected at "1240h", and thus it is found that "1240h" is the last position of the file.

Next, the case where the reproducing operation in the reverse direction is carried out will be described.

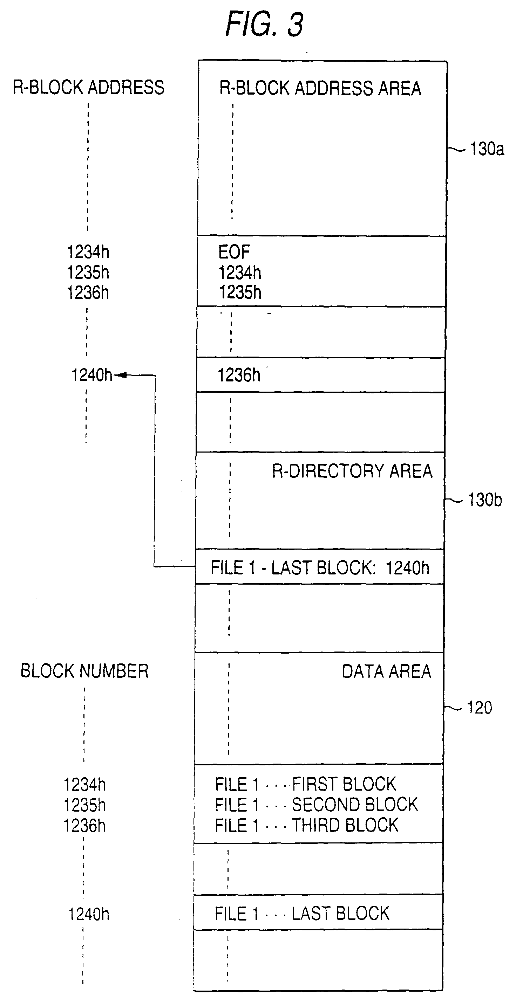

Fig. 3 shows the file structure of the memory in the reverse reproducing operation of the image recording/reproducing device according to the embodiment of the present invention. The same elements as Fig. 2 described above are represented by the same reference numerals, and the description thereof is omitted.

The memory area comprises an R-block address area 130a, an R-directory area 130b and a data area 120. The R-block address area 130a and the R-directory area 130b are arranged at any places of the memory together with the block address area 110a and the directory area 110b described above.

In the R-block area 130a is recorded block address information indicating blocks to be linked to reproduce the motional images in the reverse direction. For example, in the block address area corresponding to "1240h" is recorded "1236h" serving as the block address to be next linked. Block addresses to be successively linked are recorded like "1235h" is recorded in "1236h" and "1224h" is recorded in "1235h". EOF is recorded in the first block.

In the R-directory area 130b is recorded last block information indicating the last block of the file. For example, "1240h" is recorded in the last block of the file 1.

The reproducing operation in the reverse direction of the motional images can be more easily performed due to the above file structure. For example, when the file 1 is reproduced in the reverse direction, the last block address "1240h" of the file 1 is searched from the R-directory area 130b. Upon referring to "1240h" of the R-block address area 130b, it is found that "1236h" is located there and thus the image data of these addresses "1240h" and "1236h" are sequential to each other. Likewise, EOF is detected at 1234h, and thus it is found that it is the head position of the file.

When the motional image file recorded in the above file structure is subjected to insert recording, image data to be inserted are recorded in any empty block, and then the block address area and the R-block address area located before and after the insertion of the image data are altered. Further, when image data at some midpoint are deleted, the corresponding block address area and R-block address area are altered. As described above, the edition operation can be easily performed without directly processing the image data before and after the image data to be inserted.

The image data management information and the image data described above may be fabricated in a block structure of 1024 blocks in a solid-state memory such as a flash memory having a capacity of 8 Mbytes. In this case, one block is composed of 16 pages, and the capacity of 1 page is equal to 528 bytes. At 1 page, data can be recorded in an ordinary area of 512 bytes and appendant data can be recorded in a redundant area of 16 bytes. Accordingly, it has a storage capacity of about 8Mbytes (528X16X1024 bytes).

Next, the image data reproducing method for reproducing image data from the memory thus constructed will be described.

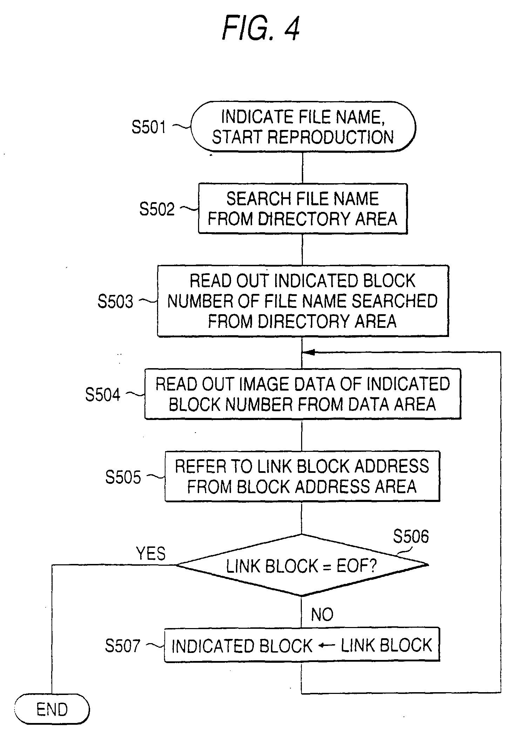

Fig. 4 is a flowchart showing the image reproducing method of the image recording/reproducing device according to an embodiment of the present invention. First, the reproducing operation in the forward direction will be described.

First, the file name of a motional image data file to be reproduced is indicated, and reproduction processing is started (S501). The file name thus indicated is searched from the directory area (S502). When the file is found, the head block address of the file recorded in the directory area is read out, and it is set as an indicated block address for reading out the image data (S503). The image data of the block number corresponding to the indicated block address are read out from the data area to reproduce images (S504). The link block address which is linked to the indicated block address is read out from the block address area (S505), and it is judged whether the link block address is EOF (S506). If it is not EOF, the processing starting from S504 is repetitively carried out with the link block address thus read out being set as the indicated block address (S507). If it is EOF, the processing is finished.

In the case of the reproducing operation in the reverse direction, the directory area is set as the R-directory area while the block address area is set as the R-block address area, and the same processing procedure as the forward reproducing operation is carried out.

When the image data are reviewed in the reverse direction in the normal reproducing operation of the images, during the normal reproducing operation the image data are successively reproduced by using the link block addresses in the forward direction which are recorded in the block address area, and when an indication for the review reproduction is detected, the image data are reproduced in the reverse direction by using the link block addresses in the reverse direction which are recorded in the R-block address area.

Further, the high-speed reproduction or reverse reproduction will be described. For example, it is assumed that 1 image frame is composed of 1 block. When the reproduction is carried out at a double speed at this time, 1 block may be skipped from the link block information recorded in the block address area or R-block address area, that is, the data reading processing (S504) may be ceased every time data of 1 block are accessed. Of course; the review can be carried out at higher speed.

In the foregoing description, the block address area when the images are normally reproduced and the R-block address area when the images are reproduced in the reverse direction are separately provided, however, both may be provided in the same area.

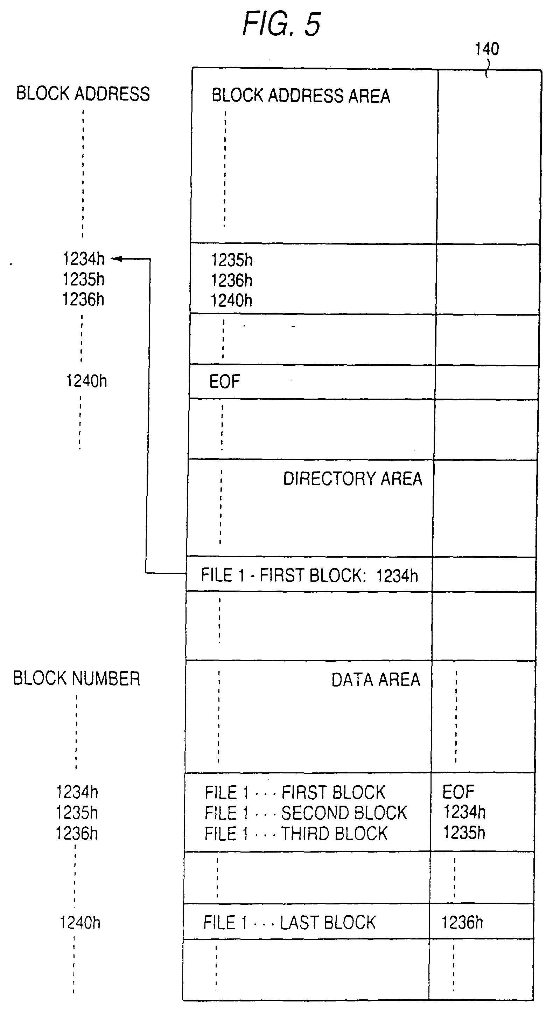

Fig. 5 shows the file structure of the memory of the image recording/reproducing device according to another embodiment of the present invention. In this embodiment, an R-block address area is provided to the redundant area 140. In this case, the reverse reproduction can be carried out by referring to the link addresses in the reverse direction which are appendant with the image data area.

The above processing function may be implemented by a computer. In this case, the processing content of the function to be owned by the image recording/reproducing device is written in a program recorded in a recording medium which can be read out by a computer. By executing this program in the computer, the processing is implemented by the computer. A magnetic recording device, a semiconductor memory or the like may be used as the recording medium which can be read out by the computer. In the case where it is required to be distributed in the market, the program may be stored in a portable type recording medium such as CD-ROM (Compact Disc Read Only Memory) and a floppy disk and then distributed, or it may be stored in a recording device of a computer connected through a network and then transmitted to another computer through the network. When it is executed by a computer, the program is stored in a hard disc device or the like in the computer in advance, and it is loaded into a main memory and executed.

As described above, for an embodiment of the invention, in the image data recording operation, for example, image data are shared to blocks each having a predetermined size, image data management information for each block is generated, and image data and the image data management information therefor are recorded. In a motional image data reproducing operation, the image data management information recorded in a recording medium is read out, image data to be next displayed are searched on the basis of these data and reproduced as image data. As described above, the image data can be processed on a block basis, and thus the search of the image data can be easily performed.

In an embodiment of an image recording device according to the invention, the image data are shared to predetermined-size blocks, the image data management information therefor is generated, and the image data of each block unit and the image data management information therefor are recorded. As described above, since the image is recorded on a block basis, the edition of image data such as insertion or deletion of image data can be easily performed each block.

In an embodiment of an image reproducing device according to the invention, in the reproducing operation of motional image data which are shared to block units and recorded in a recording medium together with image data management information therefor, the image data to be next reproduced are searched on a block basis on the basis of the image data management information, and the image data are reproduced. As described above, since the image data can be searched on a block basis, the search is easily performed and the search time can be reduced.

In an embodiment of an image reproducing method according to the invention, a block number to be next reproduced is selected according to the link block information indicating a block number which is to be linked according to a reproduction order or reverse reproduction order contained in the image data management information, and the image data of the corresponding block are read out and reproduced. As described above, since the image data to be next reproduced are searched according to the link block information, the reproduction of double speed can be easily performed. Further, the switching operation between the forward reproduction and the reverse reproduction can be easily performed.

## Claims

1. An image recording/reproducing device which has a randomly-accessible recording medium and serves to record/reproduce image data constituting motional image data of any time, the image recording/reproducing device comprising:
an image data recording unit having
image data management information generating means for generating image management information indicating the arrangement of the image data, and
image data writing means for writing the image data management information and the image data into a recording medium;
a recording medium in which image data management information and image data are recorded; and
an image data reproducing unit having
image data searching means for searching desired image data on the basis of the image data management information recorded in said recording medium, and
image data reproducing means for reproducing image data selected by said image data searching means.

2. The image recording/reproducing device as claimed in claim 1, wherein the image data are recorded on a block basis, each block being obtained by sharing an image data file constituting the image data to blocks each having a predetermined size, and the image data management information comprises head block information indicating the head block of the image data file and block address information indicating a next block to be linked when the motional image data are reproduced in a forward direction.

3. The image recording/reproducing device as claimed in claim 1, wherein the image data are recorded on a block basis, each block being obtained by sharing an image data file constituting the image data to blocks each having a predetermined size, and the image data management information comprises last block information indicating the last block of the image data file, and block address information indicating a next block to be linked in a reverse direction when the motional image data are reproduced in a reverse direction.

4. The image recording/reproducing device as claimed in claim 1, wherein said image data management information generating means renews image data management information by inserting or deleting the image data.

5. An image recording device for recording image data constituting motional image data of any time into a randomly-accessible recording medium, the image recording device comprising:
image data management information generating means for sharing image data to predetermined block units and generating image data management information every block; and
image data writing means for recording image data into a predetermined block area and writing the image data management information into a recording medium.

6. An image reproducing device for reproducing image data constituting motional image data of any time which are recorded in a randomly-accessible recording medium, the image reproducing device comprising:
image data searching means for searching image data which are reproduced on the basis of image data management information on image data which are recorded in a recording medium and shared to predetermined block units; and
image data reproducing means for reading out from the recording medium image data selected by said image data searching means and reproducing the image data.

7. An image reproducing method for reproducing image data constituting motional image data of any time which are recorded in a randomly-accessible recording medium, the image reproducing method comprising:
a step of searching image data management information on motional image data reproduced from a recording medium in which the image data are shared to predetermined-size blocks and recorded together with image data management information on the blocks;
a step of reading out head block information indicating the number of the head block of the image data when the reproducing or reverse reproducing operation is carried out on the basis of the image data management information searched;
a step for reading image data recorded in the block corresponding to the head block number thus obtained;
a step of reading out link block information indicating block numbers which are to be linked in accordance with a reproduction order or reverse reproduction order contained in the image data management information; and
a step of calculating a block number to be next reproduced from the link block information until the block number to be linked is the last number, and repeating the reading operation of image data recorded in the block corresponding to the block number thus calculated.

8. A recording medium in which motional image data of any time are recorded and which can be read out by a computer, wherein the motional image data are recorded as an image data file formed by sharing the motional image data into predetermined-size block units in a recording medium and an image data file management information file on the block, the image data file has data areas arranged on the basis of the block numbers, and the image data file management information is provided with a head block information area in which a head block number in a reproducing or reverse reproducing operation of the motional image data is recorded, and a link block information area in which block numbers to be linked in accordance with a reproducing or reverse reproducing order of the motional image data are recorded.
